**Europäisches Patentamt**

**European Patent Office**

**Office européen des brevets**

(19)

(11) Veröffentlichungsnummer : **0 176 649**
**B1**

(12) **EUROPÄISCHE PATENTSCHRIFT**

(45) Veröffentlichungstag der Patentschrift :
06.07.88

(51) Int. Cl.⁴ : **C 04 B 28/14**

(21) Anmeldenummer : 84810481.6

(22) Anmeldetag : 04.10.84

(54) Trockenverfahren zur Herstellung von Gipsbauplatten.

(43) Veröffentlichungstag der Anmeldung :
09.04.86 Patentblatt 86/15

(45) Bekanntmachung des Hinweises auf die Patenterteilung : 06.07.88 Patentblatt 88/27

(84) Benannte Vertragsstaaten :
AT BE CH DE FR GB IT LI NL

(56) Entgegenhaltungen :
FR-A- 361 066
FR-A- 1 022 360
FR-A- 2 098 706
FR-A- 2 192 984
FR-A- 2 224 263
FR-A- 2 420 512
FR-E- 2 416 205
US-A- 4 159 302

(73) Patentinhaber : GIPS-UNION AG
Talstrasse 83
CH-8021 Zürich (CH)

(72) Erfinder : Gehriger, Karl
Gummen 4
CH-4511 Rumisberg (CH)

(74) Vertreter : Mohnhaupt, Dietrich
DIETLIN, MOHNHAUPT & Cie S.A. Rue des Epinettes 19
CH-1227 Genève (CH)

EP 0 176 649 B1

**Beschreibung**

Die Erfindung betrifft ein neuartiges Verfahren zur Herstellung von Gipsbauplatten nach dem Prinzip des sogenannten Trockenverfahrens. Sie betrifft weiterhin die nach dem Verfahren erhaltenen Gipsbauplatten sowie deren Verwendung.

Es ist bekannt, Wände in Bauwerken, insbesondere nichttragende Innenwände, im Leichtbau mittels rechteckigen Gipsplatten aufzuführen. Diese bekannten Gipsbauplatten sind planparallele Platten mit einem sogenannten Kamm, d. h. einer mittigen trapezförmigen Längsleiste auf einer langen und einer kurzen Schmalseite und einer dazu passenden Nut auf den beiden übrigen Schmalseiten. Die Platten haben normalisierte Grössen. Bei einer Dicke von 2,5 ; 4 ; 6 ; 8 und 10 cm, um die gängigsten Masse zu nennen, haben sie eine Breite von 50 cm und eine Länge von 66,67 cm. Zwei Platten ergeben demgemäss 2/3 m².

Diese Masse wurden im Hinblick auf das Gewicht und die bequeme und für die meisten Fälle passende Montage der Platten gewählt.

Auch grössere Dicken der Gipsplatten wie 12 und 14 cm sind beabsichtigt, wobei dann aus Gewichtsgründen kleinere Platten erforderlich sein können. Es ist daran gedacht, dass jede solche Platte 1/5 m² ausmacht, z. B. mit den Abmessungen 50 × 40 cm.

Diese Gipsplatten, die gewichtsmässig wenige Zehntel Gew.-% eines Verstärkungsmaterials wie Glasfasern enthalten, stellt man normalerweise im Nassverfahren her.

Beim Nassverfahren stellt man aus gebranntem Gips, dessen Wassergehalt in aller Regel zwischen demjenigen des Halbhydrats und demjenigen des Anhydrits liegt, Verstärkungsstoffen wie Glasfasern, eventuell weiteren Zuschlägen wie Gipsresten, Härtungsverzögerern bzw. -beschleunigern sowie überschüssigem Wasser, einen giessfähigen wässrigen Gipsbrei her, giesst ihn in Formen, wo er sich in wenigen Minuten verfestigt, und trocknet die erhaltenen, aus den Formen ausgestossenen Gipsplatten. Beim Trocknen, das im Durchschnitt 72 Stunden dauert, tritt die Aushärtung ein, welche die anfängliche Verfestigung vervollständigt. Bei der Verfestigung und Aushärtung entstehen meist nadelförmige Calciumsulfat-Doppelhydratkristalle ($CaSO_4 \cdot 2H_2O$), deren Verfilzung für die Festigkeit der Platten verantwortlich ist.

Beim « Anmachen » des gebrannten Gipses zur Herstellung des giessfähigen Gipsbreis werden im allgemeinen auf 115 kg Gips 100 kg Wasser eingesetzt. Der gebildete Gipsbrei besteht demgemäss aus 53,5 Gew.-% Gips und 46,5 Gew.-% Wasser, bzw. auf 100 kg gebrannten Gips mit einem Restwassergehalt von ca. 5 Gew.-% entfallen 87 kg zusätzliches Wasser.

Vollständig hydratisiertes Calciumsulfat, d. h. $CaSO_4 \cdot 2H_2O$, enthält nur 20,93 Gew.-% Wasser, d. h. zur Herstellung von 100 kg Dihydrat benötigt man bei stöchiometrischen Verhältnissen 79,07 kg Anhydrit und 20,93 kg Wasser oder 83,02 kg Branntgips mit 5 Gew.-% Restwasser und 16,98 kg Wasser. Es werden aber in der Praxis beim Nassverfahren auf 83,02 kg Branntgips mit 5 Gew.-% Restwasser nach den obigen Ausführungen nicht weniger als 72,19 kg Wasser zugesetzt, d. h. 55,21 kg zuviel. Diese 55,21 kg oder ca. 40 %, bezogen auf das Endprodukt $CaSO_4 \cdot 2H_2O$, müssen in einem teuren, energieverschwendenden und zeit- und platzraubenden Verfahren wieder entfernt werden.

Man ist daher schon relativ früh auf den naheliegenden Gedanken gekommen, dem gebrannten Gips im wesentlichen nur diejenige Wassermenge zuzusetzen, die zur Aushärtung, also zur Bildung von Dihydrat, erforderlich ist. Dies sind also 20,93 g Wasser auf 79,17 Gips als Anhydrit bzw. die bezüglich Restwasser im gebrannten Gips korrigierten Werte.

Dieser einfache Gedanke ist nun ausserordentlich schwer in die Praxis umzusetzen, wie aus der Literatur zu entnehmen ist. Die Zugabe der stöchiometrisch gerade erforderlichen Wassermenge führt nicht zu einem giessfähigen Brei, so dass das Plattengiessverfahren nicht mehr enwendbar ist. Eine gleichförmige Verteilung des Wassers im trockenen, pulvrigen Gips ist ausserordentlich schwierig, wenn nicht gar unmöglich ; im besten Fall erhält man eine krümelige Masse, die man verdichten muss, wenn man Bauplatten herstellen will. Es ist ein gewisser Verdichtungsdruck notwendig, um aus der krümeligen Masse eine Platte mit ausreichender Druckfestigkeit und Biegefestigkeit herzustellen. Gemäss DE-OS 28 05 523, etwa Beispiel 3, benötigt eine solche Masse mit 15 % Feuchtigkeit entsprechend einem Ueberschuss von 2 % über die zum Abbinden stöchiometrisch erforderliche Wassermenge einen Pressdruck von 10 MPa (= 10 N/mm²) ; die Werte für Biegefestigkeit und Druckfestigkeit liegen bei 1,2 MPa bzw. 3 MPa, während die entsprechenden Werte für Platten, die auf dem Markt sind und nach dem Nassverfahren erhalten wurden, 3,4 MPa bzw. 4,4 MPa lauten, also bedeutend besser sind. Hinzu kommt, dass die Dichte der Platten des angezogenen Beispiels bei 1,8 kg/l liegt. Wie aber oben schon ausgeführt wurde, sind die Abmessungen der handelsüblichen, genormten Platten auf Werte festgelegt worden, die noch eine einigermassen bequeme Handhabung und Montage gestatten. Bei dieser Festlegung hat die Dichte der Bauplatten eine wesentliche Rolle gespielt ; diese beträgt 1,0 kg/l ± 10 %. Eine Normplatte 666 × 500 × 100 mm wiegt somit 33,3 kg. Schon bei einer Dichte von 1,5 kg/l würde ein Gewicht von 50 kg erreicht ; es beträgt 60 kg bei einer Dichte von 1,8 kg/l. Solche Platten können daher nicht verkauft werden ; die Aufstellung am Bau könnte nur noch maschinell vorgenommen werden.

Ausserdem scheint es, als ob andere physikalische Eigenschaften der Platten wie Wärmedämmung und Schallisoliervermögen bei einer Dichte von ca. 1,0 kg/l ein Optimum durchlaufen, d. h. bei

2

vorgegebenen Festigkeitswerten (die für Wände natürlich die wichtigsten Stoffwerte sind) verschlechtern sich diese Eigenschaften mit steigender Plattendichte, aber auch mit abnehmender Plattendichte.

Als weitere Anforderungen an Gipsbauplatten, die eine im Bauwesen verwendbare Qualität haben, sind zu nennen :
— glatte und saubere, trockene, verankerungsfähige und abriebfeste Oberflächen,
— enge Toleranzen (± 1 mm pro Dimension),
— verfärbungsfeste Zusammensetzung.

Aus letzterem Grund soll z. B. auch kein Formöl verwendet werden.

Die Aufgabe, Gipsbauplatten im Trockenverfahren herzustellen, wird also noch dadurch erschwert, dass nicht ohne weiteres Platten mit der erforderlichen Optimaldichte von ca. 1,0 kg/dm$^3$ (= 1 000 kg/m$^3$) erhältlich sind. In diesem Zusammenhang ist es wichtig festzuhalten, dass die Wassermenge beim Nassverfahren die Dichte der fertigen Platten mitbestimmt, indem bei einer Erhöhung der Wassermenge bezüglich der Gipsmenge einfach weniger Gips in die Form gelangt und dadurch die letztlich nach dem Trocknen erhaltene Platte bei gleichem Volumen leichter ist. Man kann also die Dichte der fertigen Gipsbauplatte durch den « Wasserwert » beeinflussen, wobei eine solche « Regelung » natürlich nur innerhalb gewisser, durch die Plattenfestigkeit gezogener Grenzen möglich und im Hinblick auf den Energieverbrauch nachteilig ist.

Das erfindungsgemässe Verfahren ist nun dadurch gekennzeichnet, dass man eine gleichförmige Mischung aus

(a) calciniertem Gips,
(b) einem unter Druck nachgiebigen, mineralischen Füllstoff, dessen Schüttdichte nach Druckeinwirkung unter 0,9 kg/l liegt,
(c) einer Wassermenge zwischen dem Einfachen und dem Eineinhalbfachen des zum Hydratisieren des gebrannten Gipses stöchiometrisch erforderlichen Minimums, und
(d) gegebenenfalls Verstärkungsmitteln und Hilfsstoffen

in einer Form, die wesentlich grösser ist als die herzustellende Gipsplatte, unter einen Pressdruck von mehr als 1,5 MPa bringt, wobei man in die Form eine solche Menge der genannten Mischung einfüllt, dass sich die gewünschte Plattengrösse, ein Pressdruck > 1,5 MPa und, nach Abzug eventueller überschüssiger Wassermengen, eine Bauplattendichte von 1 kg/l ± 10 % ergibt.

Bevorzugte Ausführungsformen des Verfahrens bilden den Gegenstand der abhängigen Patentansprüche.

Es ist bereits vorgeschlagen worden, ein Gemisch aus gebranntem (calciniertem) Gips und einem porenhaltigen Trägermaterial, beispielsweise expandiertem Vermiculit oder Perlit, welches zuvor die zur Gipshydratisierung erforderliche Wassermenge aufgenommen hat, in einer Form unter Druck zu setzen, vgl. US-PS 3 809 566. Diese Veröffentlichung konnte zwar Hinweise auf die Lösung des Problems geben, wie das erforderliche Wasser trotz der kleinen Menge gleichförmig im Gips verteilt werden kann, konnte aber sonst nichts zum Erfolg der Erfindung beitragen, weil die restlichen Verfahrensparameter und insbesondere die Möglichkeit, wie man Gipsplatten mit einer Dichte von ungefähr 1,0 kg/l erhält, nicht beschrieben oder nahegelegt sind. Sämtliche nach US-PS 3 809 566 erzeugten Gipsbauplatten haben eine Dichte von 1,37 bis 1,92 kg/l und entsprechen demnach nicht den Erfordernissen der Praxis, die einen Teil des erfindungsgemäss zu lösenden Problems bilden. Auch konnte man beispielsweise durch Extrapolation der Werte der Tabelle IV der US-PS nicht auf das Wertepaar Dichte/Druck gemäss Erfindung kommen, da eine solche Extrapolation selbst auf einen Druck von 0,1 MPa erst einen Dichtewert im Bereich von 1,3 bis 1,4 kg/l ergibt.

Beim erfindungsgemässen Verfahren wird an sich bekannter calcinierter Gips eingesetzt. Calcinierter Gips ist mindestens teilweise entwässertes Calcium-sulfat-Dihydrat, $CaSO_4 \cdot 2H_2O$, wobei das « Calcinieren » durch Brennen, aber auch durch Kochen erreicht werden kann (Winnacker-Küchler, Chemische Technologie, Bd. 2, S. 319-326 (1959), insbes. S. 323), da das Dihydrat auch schon bei Temperaturen von 100-115° unter Druck in das Halbhydrat übergeht. In der folgenden Beschreibung bezeichnet « Gips » wie in der Bautechnik ein durch Wasseraufnahme abbindendes und härtendes Calciumsulfat.

Bevorzugt wird sogenannter « Hochbrandgips » verwendet, der im wesentlichen ein Gemisch aus Halbhydrat und Anhydrit ist und in der Regel weniger Wasser enthält, als dem Halbhydrat (6,2 Gew.-%) entspricht. Normale Wassergehalte betragen ca. 4,0 bis 5,5 Gew.-%. Von stärkerer Bedeutung bei der Durchführung des neuen Verfahrens ist die Abbindezeit des einzusetzenden Gipses. Sie soll etwa 2 1/2 Minuten betragen. Die Dichte (Schüttdichte) des verwendeten Gipses liegt über 1 kg/l und beträgt normalerweise 1,07 bis 1,15 kg/l. Gipssorten mit höheren Dichten sind ebenfalls verwendbar ; da die Dichte der zu erzeugenden Platte ein erfindungsgemässer Richtwert ist, so muss bei einer höheren Dichte des Gipses in der Regel auch die Dichte oder die Menge des Füllstoffes geändert werden. Man hält also tunlich die Qualität der Ausgangsstoffe konstant.

Da beim erfindungsgemässen Verfahren bevorzugt nur die zur Gipserhärtung stöchiometrisch erforderliche Wassermenge eingesetzt wird, damit die gebildeten Bauplatten nicht künstlich getrocknet werden müssen (worauf noch einzugehen ist), oder höchstens das Eineinhalbfache dieser Menge, so weisen die fertigen Bauplatten nicht oder nicht im bisherigen Ausmass diejenigen zahlreichen kleinen luftgefüllten Hohlräume auf, welche wegen der Wasserverdampfung in den klassischen Bauplatten vorhanden sind. Es muss also dafür gesorgt sein, dass diese Hohlräume auf andere Weise in die Bauplatten kommen, denn die Dichte der Gipsplatten soll etwa 1 kg/l betragen. Gips ist, insbesondere in kompakter Form, bedeutend schwerer ; kompaktes Dihydrat hat eine Dichte von 2,32. Zu diesem Zweck wird nun dem Gips ein mineralischer Füllstoff zugesetzt, dessen Dichte kleiner als 0,9 ist, damit sich beim Abmischen mit dem Gips die Optimaldichte von ca. 1,0 kg/l erreichen lässt.

Als mineralische Füllstoffe sind im erfindungsgemässen Verfahren insbesondere natürlich oder künstlich geblähte Tone, vulkanische Gesteine und Gläser brauchbar, beispielsweise Lavaarten, Tuff, Bimsstein ; mineralische Ionenaustauscher ; und insbesondere als künstlich geblähte Tone Vermiculit und Perlit. Letzterer ist ganz besonders bevorzugt.

Perlit wird aus Rohperlit, einem vulkanischen Gestein, durch Erhitzen auf über 1 000 °C gewonnen, wobei sich das Ausgangsvolumen um das 10- bis 20 fache vergrössert. Nach Klassierung und Abziehen des Staubes erhält man die erfindungsgemäss bevorzugte Fraktion von 0,2 bis 1 mm Korngrössenbereich. Die einzelnen Teilchen besitzen mikrofeine, weitgehend geschlossene Poren. Expandierter Perlit hat eine Schüttdichte von ca. 0,045 bis 0,130 kg/l und nimmt leicht Wasser und andere Flüssigkeiten auf.

Beim erfindungsgemässen Verfahren müssen Drücke aufgewendet werden, um aus dem lockerkrümeligen Gemisch aus Wasser, Gips und Perlit einen kompakten Formkörper zu erzeugen. Dabei ist die endgültige Dichte der Bauplatte diejenige, die beim Pressen erhalten wurde (von etwaigen späteren Wasserverlusten abgesehen).

Die Dichte des einzusetzenden Füllstoffes wird nun erfindungsgemäss als die Schüttdichte im komprimierten Zustand gemessen, da gerade dieser Zustand in den fertigen Bauplatten massgebend ist. Bisher wurde diese wichtige Massnahme, die eine Vorberechnung der Mengenverhältnisse gestattet, weder vorgeschlagen noch nahegelegt.

Im komprimierten Zustand tritt teilweise ein Brechen der Füllstoffpartikel ein, und diese legen sich enger aneinander als zuvor. In der Praxis wird die Schüttdichte im komprimierten Zustand gemessen, indem man eine Probe des Füllstoffes fein zerreibt, diese in einen Messzylinder gibt und dort mit einem Glasstab fest zusammendrückt. Dann werden Volumen und Gewicht bestimmt.

Erfindungsgemäss bevorzugter Perlit hat ein Schüttgewicht von 0,045 bis 0,052 kg/l im Lieferzustand und von ca. 0,5 kg/l im komprimierten Zustand, gemessen wie oben beschrieben. Solcher expandierter Perlit wird z. B. von der Firma Fomaperlite in Mezzovico TI erzeugt und geliefert.

Die zur Herstellung der Gipsmischung eingesetzte Wassermenge liegt zwischen dem Einfachen und dem Eineinhalbfachen des stöchiometrisch Erforderlichen. Die stöchiometrisch nötige Menge kann aus den Angaben des Gipsherstellers leicht berechnet oder aber durch einen Versuch rasch bestimmt werden. An sich kommt man mit dem Einfachen der ermittelten Menge aus ; wenn grössere Mengen eingesetzt werden, so einmal aus Gründen der Sicherheit, um ein völlig Abbinden des Gipses zu gewährleisten, und zum anderen wegen der mit steigendem Wassergehalt sich verbessernden Verarbeitbarkeit der Mischung. Es wird angenommen, dass bei vermehrter Wasserzugabe eine bessere Druckverteilung in der Platte beim Pressvorgang eintritt. Schliesslich kann man die gewünschte Dichte der Erzeugnisse durch die angewandte Wassermenge leicht regeln, ohne dass der Druck beim Pressen der Platten geändert werden müsste.

Die gleichförmige Mischung aus Gips, Füllstoff und Wasser kann noch andere Zusätze in kleinen Mengen enthalten, wie insbesondere Verstärkungsmaterialien, z. B. Glas- oder Schlackenfasern ; sodann Farbstoff, Abbindebeschleuniger oder —verzögerer, Netzmittel, Hydrophobiermittel, Streckmittel wie Holzspäne und dergleichen. Solche Zusätze sind im Prinzip bekannt.

Die genannte Mischung wird so hergestellt, dass alle Bestandteile gleichförmig verteilt vorliegen. Bei einer bevorzugten Ausführungsform gibt man in einen Trommelmischer mit Knetarmen den Perlit und das Wasser, mischt ca. 20 Sekunden, fügt zur nasskrümeligen Masse den Gips und gegebenenfalls die Zuschläge und lässt den Mischer noch 1 Minute weiterlaufen. Die nach 80-120 sec. erhaltene krümelige Masse ist homogen.

Die Reihenfolge der Zugabe der Bestandteile und die Mischzeiten können von der Konstruktion des verwendeten Mischers abhängen. Wenn festgestellt wird, dass sich die Festigkeitseigenschaften der erhaltenen Platten mit der Mischzeit ändern, so war die Mischung noch nicht homogen. Die Mischzeiten dürfen diejenige Zeitspanne nicht überschreiten, nach der die Aushärtung des Gipses beginnt. Gegebenenfalls ist ein anderer Mischer zu verwenden.

Es ist zwar an sich bereits bekannt, nassen Perlit als Mittel zur gleichförmigen Wasserzugabe zu Gips zu verwenden. Dabei wurden aber die geschilderten anderen Wirkungen und Zugabegründe des Perlits nicht erkannt.

Das wie oben erhaltene Gemisch wird dann in eine Form gebracht und unter einen Pressdruck von mindestens 1,5 MPa gesetzt, wobei das Volumen des Gemisches auf etwa die Hälfte zurückgeht. Erfindungsgemäss wird nun eine Kopplung zwischen Mischungsmenge und Pressdruck hergestellt, derart, dass die Menge an Gemisch und das Endvolumen vorgegeben werden und sich der Enddruck auf einen Wert im angegebenen Bereich einstellt.

Der Pressdruck kann auf verschiedene Weise aufgebracht werden. Normalerweise hält man die beiden Seitenwände eines Formkastens und die beiden Schmalseiten ortsfest und presst die krümelige, zur Plattenherstellung bestimmte Masse vertikal oder horizontal an den beiden anderen Schmalseiten zusammen. Es ist aber auch möglich, eine oder beide Seitenwände der Form beweglich zu machen und sie als Pressplatte(n) auszugestalten.

Der Pressdruck, insbesondere wenn er auf die Schmalseiten aufgebracht wird, ist im allgemeinen bei sich ändernder Plattendicke nicht der gleiche. Da die krümelige Gipsmasse an den Wänden mancher Formen zu haften scheint, baut sich ein Gegendruck auf, der sich bei dünneren Platten stärker bemerkbar macht als bei dickeren.

Bei Formen aus glatten, mit Wasser eingesprühten Chromstahl werden Pressdrücke von 1,9 bis 3,2 MPa für Platten von 10 cm Dicke, von 3 bis 4,2 MPa bei 8 cm Dicke, und von 4,5 bis 5,3 MPa bei 6 cm Dicke beobachtet.

Die fertige Platte verliert beim Stehenlassen noch etwas an Gewicht, wenn die Ausgangsmischung überschüssiges Wasser enthielt. Sie hat aber bereits beim Ausformen die Festigkeiten und Isoliereigenschaften der wie bisher im Nassverfahren erhaltenen Platten nach deren Trocknung. So werden im Vergleich zu Nassplatten folgende Werte gemessen :

| | Nassplatte | Trockenplatte |
|---|---|---|
| Dichte, ± 10 %, kg/l | 1'000 | 1'000 |
| Druckfestigkeit, N/mm$^2$ | 4,4 | 4,2 |
| Elastizitätsmodul, kN/mm$^2$ | 1,54 | 1,7 |
| Biegezugfestigkeit, N/mm$^2$ | 2,8-3,4 | 3,6 |
| lin. Wärmeausdehnungskoeff., mm/m.K | 0,02 | 0,02 |
| Wärmeleitzahl, W/m.K | 0,4 | 0,35 |
| Dampfleitzahl, mg/m.h.Pa | 0,1 | 0,1 |
| Feuerwiderstand, 6 cm Dicke | F90 | F90 |
| 8 cm Dicke | F120 | F120 |
| 10 cm Dicke | F120 | F180 |
| Schalldämmvermögen (dB)[*] | | |
| 6 cm | 32 | 32 |
| 8 cm | 35 | 38 |
| 10 cm | 37 | 40 |

*) EMPA 56200

Die obige Tabelle zeigt, dass bei bedeutend rationellerer und billigerer Produktion die gleichen guten und zum Teil noch besseren Werte wie bisher erzielt wurden ; der Feuerschutz ist besser, ebenso der Schallschutz in besonders störenden Frequenzbereichen (geht aus der Tabelle nicht hervor).

Das Ausformen wird erleichtert, wenn man die Forminnenwände vor dem Einbringen des Gemisches mit Wasser einsprüht. Dadurch erzielt man auch glatte Seitenflächen.

Die Mengenverhältnisse der einzelnen Komponenten der Mischung dürfen sich, stets die gleiche Beschaffenheit vorausgesetzt, nur in denjenigen Grenzen ändern, die durch den Pressdruck und die erforderliche Dichte der fertigen Platte gezogen sind. Setzt man beispielsweise einem bestimmten Gemisch noch Perlit zu, so nimmt das Volumen des Gemisches zu. Es steigt dann beim Pressen der Pressdruck (Enddruck), und die Dichte der Platte ändert sich im allgemeinen ebenfalls. Zu hohe Pressdrücke führen zu klangharten Platten die, wie schon der Name sagt, keine ausreichenden Schallisoliereigenschaften mehr haben.

Wenn man beispielsweise die Plattendichte ändern möchte, ohne eine Aenderung des Pressdruckes zu bewirken, so müssen Volumenteile einer Komponente durch entsprechende Volumenteile einer anderen Komponente ersetzt werden, und zwar unter Berücksichtigung der jeweiligen Schüttdichten ; dabei ist die Schüttdichte des Perlits nach Zusammenpressen einzusetzen.

Aus diesem Grunde hat es sich als günstig erwiesen, die Hauptbestandteile der Mischung volumetrisch abzumessen anstatt anzuwiegen.

Für das erfindungsgemässe Verfahren geeignete Mischungen enthalten die einzelnen Komponenten bevorzugt in folgenden Verhältnissen :

Gips zu Perlit zu Wasser = 1 : (1,3 bis 1,5) : (0,2 bis 0,4) auf das Volumen gerechnet ; die Schüttdichte von Gips war 1,15 kg/l und diejenige von Perlit 0,052 kg/l. Zu 100 kg Gemisch werden bevorzugt noch 50-200 g Glasstapelfasern als Verstärkungsmittel zugesetzt.

Die folgenden Beispiele sollen zur weitern Erläuterung dienen und die Erfindung nicht einschränken.

## Beispiel 1

Man gibt in einen Trommelmischer (schrägstehende rotierende Trommel mit gegenläufig rotierendem Knetwerk) 43 Liter Perlit der Körnung 0,2-4 mm und dann 6,6 Liter Wasser. Nach 30 Sekunden Mischzeit werden auf einmal 30 Liter Hochbrandgips, Restwassergehalt 4,3 Gew.-%, Körnung 0-2,5 mm, sowie 30 g Glasstapelfasern zugegeben. Man lässt den Mischer 60 Sekunden weiterlaufen und überführt den Inhalt in eine mit Wasser ausgesprühte Form, wo die krümelige Masse auf Dimensionen 50 × 66,6 × 10 cm (33,3 l) gebracht wird. Der Enddruck beim Pressen betrug 2,6 MPa. Die nach 90 Sekunden ausgeformte Platte verlor nach 2 Wochen noch 2 kg an Gewicht und wog schliesslich 34,8 kg. Sie hatte alle Eigenschaften der bisher bekannten Platten, z. T. noch bessere (vgl. obige Tabelle).

## Beispiel 2

Man gibt in einem Trommelmischer 34 l Perlit (vgl. Beispiel 1) und 5,2 l Wasser. Nach 35 sec. Mischzeit werden 24 l Hochbrandgips und 24 g Glasstapelfasern zugestellt. Die nach 1 Min. weiterem Mischen erhaltene krümelige, homogene Masse wird in eine Form eingefüllt und auf die Dimensionen 50 × 66,67 × 8 cm (26,67 l) gebracht. Der End-Pressdruck betrug 3,8 MPa.

Die Platte wurde nach 90 sec. ausgeformt und war sofort verarbeitungsbereit. Sie verlor nach 2 Wochen ca. 1,5 kg an Gewicht. Sie hatte die guten Eigenschaften der Platte gemäss Beispiel 1.

## Beispiel 3

Beispiel 1 wurde wiederholt : in den Trommelmischer gibt man 26 kg Perlit und 4,0 l Wasser. Nach dem Mischen werden 18 Liter Hochbrandgips und 18 g Glasfasern zugesetzt. Nach erneutem Durchmischen (60 sec.) wird in einer Form auf die Abmessungen 50 × 66,67 × 6 cm (20 l) verdichtet. Der Enddruck beim Pressen betrug 4,9 MPa.

Die Platte wurde nach 90 sec. ausgeformt und war sofort verarbeitungsbereit. Sie verlor nach 2 Wochen ca. 1 kg an Gewicht ; sie hatte die in der Tabelle aufgeführten Eigenschaften.

Die erfindungsgemäss erhaltenen Bauplatten dienen zum Aufbau von nichttragenden Innenwänden, meist Trennwänden, in Bauwerken und zur Verkleidung von Decken. Auf Grund ihrer durch das Pressen besonders glatten, gleichmässigen und dichten Oberflächen benötigen sie nur weniger Nacharbeit als die bekannten Trockenplatten.

## Patentansprüche

1. Verfahren zur Herstellung von Gipsbauplatten nach dem Trockenverfahren, dadurch gekennzeichnet, dass man eine gleichförmige Mischung aus
(a) calciniertem Gips,
(b) einem unter Druck nachgiebigen, mineralischen Füllstoff, dessen Schüttdichte nach Druckeinwirkung unter 0,9 kg/l liegt,
(c) einer Wassermenge zwischen dem Einfachen und dem Eineinhalbfachen des zum Hydratisieren des gebrannten Gipses stöchiometrisch erforderlichen Minimums, und
(d) gegebenenfalls Verstärkungsmitteln und Hilfsstoffen
in einer Form, die wesentlich grösser ist als die herzustellende Gipsplatte, unter einen Pressdruck von mehr als 1,5 MPa bringt, wobei man in die Form eine solche Menge der genannten Mischung einfüllt, dass sich die gewünschte Plattengrösse, ein Pressdruck > 1,5 MPa und, nach Abzug eventueller überschüssiger Wassermengen, eine Bauplattendichte von 1 kg/l ± 10 % ergibt.

2. Verfahren nach Anspruch 1, dadurch gekennzeichnet, dass man Hochbrandgips mit 4,5 bis 5,5 Gew.-% Restwasser verwendet.

3. Verfahren nach Anspruch 1 oder 2, dadurch gekennzeichnet, dass man als Füllstoff expandierten Perlit verwendet.

4. Verfahren nach Anspruch 1 bis 3, dadurch gekennzeichnet, dass man Gips, Perlit und Wasser im Volumenverhältnis 1 : (1,3 bis 1,5) : (0,2 bis 0,3) einsetzt.

5. Verfahren nach Anspruch 4, dadurch gekennzeichnet, dass man Gips, Perlit und Wasser im Volumenverhältnis von etwa 30 : 43 : 6,6 einsetzt.

6. Verfahren nach Anspruch 1, dadurch gekennzeichnet, dass man zunächst eine Vormischung aus Füllstoff, insbesondere Blähperlit und Wasser, herstellt und dieser Vormischung dann den Gips zugibt.

7. Verfahren nach mindestens einem der vorstehenden Ansprüche, dadurch gekennzeichnet, dass man Gipsplatten mit einer Dicke von 6, 8 und 10 cm herstellt und dabei Pressdrücke in den Bereichen von 4,5 bis 5,3 ; 3 bis 4,2 ; bzw. 1,9 bis 3,2 MPa anwendet.

8. Verfahren nach Anspruch 1, dadurch gekennzeichnet, dass man eine Plattenform mit glanzverchromten oder polierten Oberflächen verwendet und diese vor dem Einbringen der Mischung mit Wasser einsprüht.

9. Gipsbauplatte, erzeugt nach dem Verfahren gemäss einem oder mehreren der Ansprüche 1 bis 8.

10. Verwendung der Gipsbauplatten nach Anspruch 9 als nichttragende Innenwände oder Deckenverkleidungen in Bauwerken.

## Claims

1. A process for the production of gypsum-based construction boards by the dry production method, characterized by the fact that a homogeneous mixture of

(a) calcined gypsum,

(b) a mineral filler yielding on compression and having a bulk density below 0.9 kg/l after compression,

(c) an amount of water comprised between one and one a half times the minimum amount stoechiometrially required for the hydratation of the calcined gypsum, and

(d) optionally reinforcing materials and auxiliary agents,

is subjected to a pressure exceeding 1.5 MPa in a mould which is substantially larger than the gypsum-based construction board to be produced, such an amount of said mixture being introduced into the mould that it will result in the desired size of the construction board, in a pressure exceeding 1.5 MPa, and in a construction board density of 1 kg/l ± 10 % after the deduction of any quantities of excess water.

2. The process of claim 1, characterized by the use of high-burned gypsum containing from 4.5 to 5.5 % by weight of residual water.

3. The process of claim 1 or 2, characterized by the use of expanded perlite as a filler.

4. The process of claims 1 to 3, characterized by the fact that a mixture of gypsum, perlite and water is used in a volume ratio of 1 : (1.3 to 1.5) : (0.2 to 0.3).

5. The process of claim 4, characterized by the fact that a mixture of gypsum, perlite and water is used in a volume ratio of about 30 : 43 : 6.6.

6. The process of claim 1, characterized by the fact that a premix is first prepared from filler, especially expanded perlite, and water, and then the gypsum is added to that premix.

7. The process of one at least of the preceding claims, characterized by the fact that gypsum-based boards are produced having a thickness of 6, 8 and 10 cm, and that pressures are applied in the range of 4.5 to 5.3 ; 3 to 4.2 ; and 1.9 to 3.2 MPa, respectively.

8. The process of claim 1, characterized by the fact that a plate mould having bright chromium-plated or polished surfaces is used, and that these surfaces are sprayed with water before introduction of the mixture.

9. A gypsum-based construction board, obtained by the process of one or more of claims 1 to 8.

10. The use of the gypsum-based construction boards of claim 9 as non-load bearing inner walls or ceiling panellings in buildings.

## Revendications

1. Procédé pour la fabrication à sec de panneaux de construction en plâtre, caractérisé en ce que l'on soumet dans un moule, de dimensions essentiellement plus grandes que le panneau de plâtre à fabriquer, un mélange uniforme de :

a) plâtre calciné,

b) une charge minérale compressible dont la densité en vrac est inférieure à 0,9 kg/l après application d'une compression,

c) une quantité d'eau comprise entre une et une fois et demie le minimum stœchiométrique requis pour hydrater le plâtre calciné, et

d) si désiré, des matériaux de renforcement et autres adjuvants,

à une pression de plus de 1,5 MPa, alors que l'on verse dans le moule une quantité dudit mélange telle que les dimensions du panneau souhaitées soient réalisées, qu'une pression supérieure à 1,5 MPa soit atteinte, et qu'une densité du panneau de construction de 1 kg/l ± 10 % soit obtenue, après déduction de l'eau excédentaire éventuelle.

2. Procédé selon la revendication 1, caractérisé en ce que l'on utilise un plâtre hautement cuit contenant entre 4,5 et 5,5 % en poids d'eau résiduelle.

3. Procédé selon la revendication 1 ou 2, caractérisé en ce que l'on utilise de la perlite expansée comme charge.

4. Procédé selon les revendications 1 à 3, caractérisé en ce que l'on emploie le plâtre, la perlite et l'eau dans des proportions volumiques de : 1 : (1,3 à 1,5) : (0,2 à 0,3).

5. Procédé selon la revendication 4, caractérisé en ce que l'on emploie le plâtre, la perlite et l'eau dans des proportions volumiques de : 30 : 43 : 6,6.

6. Procédé selon la revendication 1, caractérisé en ce que l'on réalise d'abord un pré-mélange du matériau de charge, particulièrement de perlite gonflée et d'eau, auquel on ajoute ensuite le plâtre.

7. Procédé selon l'une au moins des revendications précédentes, caractérisé en ce que l'on produit des panneaux de plâtre ayant une épaisseur de 6, 8 et 10 cm, et que l'on applique respectivement une pression de l'ordre de 4,5 à 5,3 ; de 3 à 4,2 et de 1,9 à 3,2 MPa.

8. Procédé selon la revendication 1, caractérisé en ce qu'on le réalise dans un moule en plateaux dont la surface est chromée brillant ou polie, et que l'on pulvérise de l'eau sur cette surface avant de verser le mélange.

9. Panneau de plâtre obtenu par le procédé selon l'une ou plusieurs des revendications 1 à 8.

10. Utilisation des panneaux de construction en plâtre selon la revendication 9, comme paroi intérieure non porteuse ou revêtement de plafond dans la construction de bâtiments.